# EUROPÄISCHE PATENTSCHRIFT

(11) **EP 2 600 181 B1**
(45) Veröffentlichungstag und Bekanntmachung des Hinweises auf die Patenterteilung: **21.08.2024**
(21) Anmeldenummer: 12195037.2
(22) Anmeldetag: 30.11.2012
(51) Int. Cl.: G02B 6/42

(54) **Verfahren zum Kopppeln eines Glasfaserbündels mit einem optischen Konversionselement sowie Baugruppe mit einem optischen Konversionselement und einem Glasfaserbündel**
Method for coupling an optical fibre bundle with an optical conversion element and assembly with an optical conversion element and an optical fibre bundle
Procédé de couplage d'un faisceau de fibres optiques avec un élément de conversion optique ainsi que le module avec un élément de conversion optique et un faisceau de fibres optiques

(30) Priorität: 02.12.2011 DE 102011119972
(43) Veröffentlichungstag der Anmeldung: 05.06.2013
(73) Patentinhaber: SCHOTT AG, 55122 Mainz (DE)
(72) Erfinder: Schultheis, Bernd, 55270 Schwabenheim (DE); Bleisinger, Björn, 55499 Riesweiler (DE); Russert, Hubertus, 65321 Heidenrod (DE)
(74) Vertreter: Blumbach · Zinngrebe Patentanwälte PartG mbB

(56) Entgegenhaltungen:
- DE-A1- 2 545 467
- FR-A5- 2 075 117
- GB-A- 1 500 038
- US-A- 4 946 242
- US-A- 4 984 864
- US-A1- 2002 015 567
- US-A1- 2011 182 552
- US-B1- 6 530 698

## Beschreibung

### Gebiet der Erfindung

Die Erfindung betrifft ein Verfahren zum Koppeln eines optischen Konversionselementes, wie beispielsweise einer LED oder einer Fotodiode, mit einem lichtleitenden Glasfaserbündel. Weiter betrifft die Erfindung eine Baugruppe, in welcher ein optisches Konversionselement mit einem lichtleitenden Glasfaserbündel optisch gekoppelt ist.

### Hintergrund der Erfindung

Lichtleitende Bündel aus Glasfasern werden schon seit geraumer Zeit verwendet, um Daten zu übertragen. In jüngerer Zeit, insbesondere seitdem LEDs immer leistungsfähiger werden, dienen lichtleitende Glasfaserbündel vermehrt auch Beleuchtungszwecken, beispielsweise zur Ambiente- und Innenraumbeleuchtung, insbesondere von Fahrzeugen. Dabei werden auch seitenemittierende Fasern verwendet, um das Licht im Raum zu verteilen.

Um das lichtleitende Glasfaserbündel an einem optischen Konversionselement, wie beispielsweise einer LED, anzukoppeln derart, dass das Licht mit möglichst hoher Effizienz in die Fasern geleitet wird, ist es aus der Praxis bekannt, dass Glasfaserbündel mittels einer Hülse zu terminieren derart, dass am Ende des Faserbündels eine Lichtaustritts- bzw. Lichteintrittsfläche vorhanden ist. Mittels dieser Hülse, welche auch als Stecker ausgebildet sein kann, kann nunmehr das Faserbündel an dem optischen Konversionselement angeschlossen werden.

Das Terminieren des Faserbündels erfolgt in der Regel durch Polieren der Endfläche.

Diese Vorgehensweise ist zum einen relativ aufwändig. Weiter ist zum Bereitstellen zweier korrespondierender Stecker ein gewisser Mindestbauraum erforderlich. Steckverbindungen haben den Nachteil, dass diese sich unter Umständen lockern können und sind der Regel mit relativ hohen Dämpfungsverlusten verbunden.

Es ist weiter bekannt, optische Konversionselemente in einer Vergussmasse einzubetten. So zeigt beispielsweise die Offenlegungsschrift WO 03/077002 A1 ein Verfahren, bei welchem ein optisches Sende- oder Empfangselement in einer transparenten Vergussmasse eingebettet wird und bei dem ein Gehäuse eine zylindrische Ausnehmung aufweisen kann, in welcher eine Lichtleitefaser gehalten werden kann. Nachteilig ist auch bei diesem Verfahren, dass die lichtleitende Faser auf bekannte Weise aufwändig terminiert werden muss. FR2075117 offenbart ein ähnliches Verfahren wobei das optische Konversionselement in die Hülse eingeführt wird, sodann die Hülse mit der Vergussmasse gefüllt wird, danach das Glasfaserbündel eingeführt wird und sodann die Vergussmasse ausgehärtet wird.

### Aufgabe der Erfindung

Der Erfindung liegt demgegenüber die Aufgabe zugrunde, ein Verfahren zum Koppeln von optischen Konversionselementen, wie LEDs, Fotodioden und Fototransistoren, bereit zu stellen, bei welchen die genannten Nachteile des Standes der Technik reduziert werden.

Es ist insbesondere eine Aufgabe der Erfindung, das Koppeln eines Glasfaserbündels mit einem optischen Konversionselement derart zu vereinfachen, dass dieses preiswerter möglich ist und eine langzeitstabile, robuste optische Verbindung bereitgestellt wird.

### Zusammenfassung der Erfindung

Die Aufgabe der Erfindung wird bereits durch ein Verfahren zum Koppeln eines optischen Konversionselementes mit einem Glasfaserbündel sowie durch eine Baugruppe mit einem optischen Konversionselement und einem Glasfaserbündel nach einem der unabhängigen Ansprüche gelöst.

Bevorzugte Ausführungsformen und Weiterbildungen der Erfindung sind den jeweiligen Unteransprüchen zu entnehmen.

Die Erfindung betrifft ein Verfahren zum Koppeln eines Glasfaserbündels mit einem optischen Konversionselement.

Unter Koppeln im Sinne der Erfindung wird das optische Verbinden des Konversionselements mit dem Glasfaserbündel derart verstanden, dass Licht, welches vom optischen Konversionselement erzeugt wird, in das Glasfaserbündel eintreten und dort weitergeleitet werden kann bzw., im Falle eines Fototransistors oder einer Fotodiode, das Licht über das Glasfaserbündel zum optischen Konversionselement geleitet wird.

Glasfaserbündel zum Leiten von Licht sind bekannt. Es handelt sich dabei typischerweise um Faserbündel aus Einzelfasern mit einem Durchmesser von weniger als 100 µm.

Die einzelnen Fasern bestehen dabei aus einem Kern und einem Hüllmaterial, wobei der Kern eine höhere Brechzahl als das Hüllmaterial aufweist. So wird das Licht an der Grenzfläche zwischen Hüllmaterial (auch "Cladding" genannt) reflektiert und kann entlang der Haupterstreckungsrichtung der Faser geleitet werden.

Für Beleuchtungszwecke sind dabei auch seitenemittierende Fasern bekannt. Bei dieser Art von lichtleitender Faser wird beispielsweise über Streupartikel im Kern der Faser oder über mechanische Defektstellen im Bereich Cladding/Kern erreicht, das ein gewisser Anteil des Lichtes beim Durchlaufen der optischen Faser zur Seite hin ausgekoppelt wird. Derartige seitenemittierende Fasern eignen sich insbesondere, um Flächenbeleuchtungen bereit zu stellen und können beispielsweise auch als Bestandteil von flexiblen Flächengebilden, wie Geweben, verwendet werden.

Unter optischen Konversionselementen im Sinne der Erfindung werden Bauteile verstanden, bei denen mittels Anlegen einer Spannung Licht erzeugt wird und/oder welche beim Auftreffen von Licht eine Spannung erzeugen und so insbesondere als Sensoren verwendet werden können.

Als optisches Konversionselement sind insbesondere LEDs vorgesehen. Dabei kann es sich um einfarbige LEDs, auch in Form von Weißlicht-LEDs handeln, bei welchen über eine Beschichtung, welche angeregt wird und sodann Licht in anderer Farbe emittiert, insgesamt der Eindruck von weißem Licht erzeugt wird. Weiter bekannt sind RGB-LEDs, bei denen über das Mischen des Lichtes dreier verschieden farbiger LEDs nahezu eine beliebige Farbe eingestellt werden kann. Derartige RGB-LED-Cluster werden insbesondere auch verwendet, um mit hoher Effizienz weißes Licht zu erzeugen. Dazu zählen auch sogenannte RGBW-LEDs, die zusätzlich einen weißen Farbkanal besitzen.

Gemäß der Erfindung werden optisches Konversionselement und Glasfaserbündel in einer transparenten Vergussmasse eingebettet derart, dass Licht durch die transparente Vergussmasse vom optischen Konversionselement in die Fasern des Faserbündels geleitet wird bzw. aus dem Faserbündel austritt und durch die transparente Vergussmasse auf das optische Konversionselement fällt.

Optisches Konversionselement und Glasfaserbündel sind also gemeinsam in einem Block Vergussmasse miteinander verbunden.

Hierzu werden optisches Konversionselement und Glasfaserbündel in die flüssige Vergussmasse eingeführt und die Vergussmasse sodann ausgehärtet. Auch können optisches Konversionselement und Glasfaserbündel gemeinsam mit einer flüssigen Vergussmasse umspritzt werden, welche sodann aushärtet bzw. ausgehärtet wird.

Die Brechzahl der Vergussmasse sollte, um eine möglichst gute Koppeleffizienz zu erreichen, an die Brechzahl des Kerns der Glasfasern angepasst sein. Insbesondere sollte sich die Brechzahl des Kerns der Fasern des Glasfaserbündels weniger als 1,5, vorzugsweise weniger als 0,08 von der Brechzahl des Füllmaterials unterscheiden.

Erfindungsgemäß wird eine Hülse verwendet, wobei jeweils von einer Seite die Glasfaser und das optische Konversionselement in die Hülse eingeführt werden. Die Hülse wird, nach dem Einführen des optischen Konversionselements, mit der Vergussmasse gefüllt, welche nach dem Einführen des Glasfaserbündels ausgehärtet wird.

Optisches Konversionselement und Glasfaserbündel sind so in der Vergussmasse eingebettet.

Die Verwendung einer Hülse ist eine sehr einfache Variante zum Koppeln der beiden Bauteile, bei der kein teures Werkzeug, wie beispielsweise Spritzgusswerkzeug, bereitgestellt werden muss.

Bei dieser Ausführungsform der Erfindung kann insbesondere eine mittels Licht, insbesondere mittels UV-Licht, oder mittels Wärme vernetzende Vergussmasse verwendet werden. Weiter kann auch ein Zwei-Komponenten-Epoxydharz oder ein Zwei-Komponenten-Silikon verwendet werden.

Vorzugsweise wird eine transparente Hülse verwendet, beispielsweise aus Polymethylmetacrylat. Mit einer derartigen transparenten Hülse kann beispielsweise mittels UV-Licht die Vergussmasse durch die Hülse hindurch ausgehärtet werden.

Weiter kann, wie es bei einer weiteren Ausführungsform der Erfindung vorgesehen ist, eine Hülse mit zumindest transparenter Innenwand verwendet werden, wobei die Brechzahl der transparenten Innenwand der Hülse kleiner als die Brechzahl der transparenten Vergussmasse ist. Bei dieser Ausführungsform der Erfindung wird über die Kombination aus Hülse und Vergussmasse ein Lichtleiter bereitgestellt dadurch, da es an der Grenzfläche Vergussmasse/Innenwand der Hülse zu Totalreflektionen kommt. So kann die Koppeleffizienz abermals verbessert werden.

Bei einer nicht beanspruchten Ausführungsform dieses Kopplungsverfahren wird das Glasfaserbündel zur Ausbildung einer Hülse mit einer transparenten Vergussmasse umspritzt oder umgossen.

Dies kann insbesondere mittels Spritzguss erfolgen. Vorzugsweise wird das optische Konversionselement gleichzeitig zumindest mit den Enden des Glasfaserbündels mit umspritzt. Dies ermöglicht eine sehr schnelle Kopplung der Bauteile, erfordert aber relativ teures Spritzgusswerkzeug.

Es ist weiter denkbar, zum Umspritzen zwei unterschiedliche Vergussmassen zu verwenden.

So ist beispielsweise denkbar, in einem ersten Schritt mittels eines Spritzgussverfahrens eine Hülse direkt an das Glasfaserbündel anzuformen derart, dass die Enden des Glasfaserbündels nicht umspritzt sind. Die Hülse kann derart ausgebildet sein, dass sich nunmehr ein tropfenförmiger, zylindrischer Abschnitt an das Glasfaserbündel anschließt, in dessen Inneren die Enden des Glasfaserbündels frei liegen.

In einem weiteren Schritt kann, vorzugsweise ebenfalls mittels eines Spritzgussverfahrens, das Innere dieser Hülse mit einem anderen Material ausgespritzt werden und dabei gleichzeitig das optische Konversionselement vergossen werden. Bei geeigneter Brechzahlanpassung vom Material der Außenhülse zum Material der Vergussmasse für das Innenteil der Hülse kann wiederum auf sehr einfache Weise ein Lichtleiter bereitgestellt werden, der nunmehr das Glasfaserbündel optisch mit dem Konversionselement koppelt.

Generell ist es bei einer Verwendung einer Vergussmasse, welche auf die Brechzahl des Kerns der Glasfasern angepasst ist, von Vorteil, dass auf ein Polieren der Enden des Glasfaserbündels verzichtet werden kann.

Vielmehr können die Glasfasern in der Vergussmasse derart eingebettet sein, dass die Enden der einzelnen Fasern nicht auf einer Ebene liegen, sondern versetzt sind. Ein derartiger Versatz ist in der Regel schon nach Durchtrennen eines Glasfaserkabels vorhanden. Die Erfindung ermöglicht eine hohe Koppeleffizienz ohne den Versatz der Fasern etwa durch Schleifen der Endflächen zu egalisieren.

Bei einer Weiterbildung der Erfindung wird eine Hülse verwendet, welche zumindest teilweise aus Metall besteht.

Über eine Hülse aus Metall oder über eine Hülse mit metallischen Abschnitten kann zum einen die Wärmeabfuhr verbessert werden. Dabei ist denkbar, nicht nur Wärme, die beispielsweise von einer LED erzeugt wird, abzuführen, sondern es ist auch denkbar, eine Treiberschaltung, insbesondere mit einem Spannungswandler zum Betreiben der LED, mit in der Vergussmasse einzubetten. Die von diesen Bauteilen erzeugte Wärme wird vorzugsweise über einen Metallabschnitt der Hülse abgeleitet. Dieser Abschnitt kann einen Kühlkörper umfassen oder kann an ein weiteres Bauteil mit guter Wärmeleitung derart angeschlossen werden, dass dieses weitere Bauteil als zusätzlicher Kühlkörper genutzt wird.

Weiter ist denkbar, einen Metallabschnitt der Hülse als zumindest einen elektrischen Anschlusskontakt zu verwenden. Da LEDs bzw. deren Treiberschaltungen typischerweise mit niedriger Spannung von weniger als 24 Volt betrieben werden, ist beispielsweise denkbar, einen metallischen Abschnitt der Hülse als Null-Leiter oder Masseanschluss zu verwenden.

Weiter ist denkbar, dass ein elektrischer Anschlusskontakt für das optisches Konversionselement und/oder eine Treiberschaltung des optischen Konversionselements teilweise in der Vergussmasse eingebettet ist. Diese Ausführungsvariante der Erfindung ermöglicht insbesondere, dass die aus der Vergussmasse ragenden Kontakte zusammen mit der Vergussmasse und ggf. zusammen mit einer Hülse einen Stecker ausbilden, mit dem das optische Konversionselement an einer Spannungsquelle angeschlossen werden kann.

Insbesondere ist denkbar, die Kontakte als Stiftsockelkontakte auszubilden, beispielsweise als Stiftsockelkontakte gemäß der Bipin-Fuß-Normierung. Dabei sind sowohl G als auch GU-Lampensockel denkbar. Die Kontaktstifte können dabei als Stifte, als Federklemmen oder pilzförmig ausgestaltet sein.

Bei einer Weiterbildung der Erfindung wird das optische Konversionselement quer, also seitlich zur Haupterstreckungsrichtung des Glasfaserbündels eingeführt.

Diese Ausführungsform der Erfindung eignet sich zum einen, um ein optisches Konversionselement mit zwei Glasfaserbündeln zu koppeln. Die Glasfaserbündel liegen sich dabei in der transparenten Vergussmasse gegenüber, wobei das optische Konversionselement zwischen den Endflächen der Glasfaserbündel in die Vergussmasse eingeführt wird.

Weiter eignet sich diese Ausführungsform der Erfindung auch, um einen vorzugsweise um 90° abknickenden Anschluss bereitzustellen.

Vorzugsweise wird ein Reflektionselement, beispielsweise ausgebildet als Spiegel, über welches beispielsweise Licht vom seitlich eingeführten Konversionselement quer in Richtung der Lichteintrittsfläche des Faserbündels fällt, ebenfalls in der Vergussmasse eingebettet.

Die Erfindung betrifft des Weiteren eine Baugruppe mit zumindest einem optischen Konversionselement und einem Glasfaserbündel, insbesondere wie vorstehend beschrieben hergestellt.

Gemäß der Erfindung sind ein Glasfaserbündel und ein optisches Konversionselement in einer transparenten Vergussmasse gemeinsam eingebettet, derart, dass über die Vergussmasse eine optische Verbindung zwischen Konversionselement und Glasfaserbündel bereitgestellt ist.

Erfindungsgemäß umfasst die Baugruppe eine Hülse, welche einen Abschnitt mit konischer Form aufweist, wobei an den konischen Abschnitt auf beiden Seiten ein im wesentlichen zylindrischer Abschnitt angrenzt.

Auf einer Seite des konischen Abschnitts, nämlich der Seite mit dem größeren Durchmesser, kann das Glasfaserbündel mit einer Umhüllung in Form einer Ummantelung, die es typischerweise umfasst, eingeführt sein. Hierzu hat der im wesentlichen zylindrischen Abschnitt vorzugsweise einen Durchmesser, der in etwa dem Außendurchmesser des Glasfaserbündel mit Ummantelung entspricht, insbesondere einen Durchmesser der 0,1 bis 0,5 mm größer ist. In diesem ersten zylindrischen Abschnitt wird das aus Glasfaserbündel und Ummantelung bestehende Glasfaserkabel sicher gehalten, insbesondere während des Einbringens und Aushärtens der Vergussmasse.

Der konische Abschnitt dient der Fixierung und Zusammenführung des Glasfaserbündels beim Einführen. Vor dem Einführen wird die Ummantelung teilweise entfernt, das Glasfaserkabel wird mithin abisoliert.

Nunmehr liegen die Enden des Glasfaserbündels frei und können aufspleißen. Über den konischen Abschnitt werden beim Einfädeln die einzelnen Fasern des Glasfaserbündels zusammen geführt und es wird die axiale Ausrichtung der Fasern untereinander verbessert.

Ein weiterer im Wesentlichen zylindrisch ausgebildeter Abschnitt der Hülse nimmt nunmehr das zusammengefasste Glasfaserbündel auf. Vorzugsweise entspricht der Durchmesser dieses Abschnitts dem Durchmesser des Glasfaserbündels, insbesondere ist dieser maximal 0,1 mm größer.

Dieser weitere zylindrische Abschnitt sorgt insbesondere dafür, dass sich beim Injizieren der Vergussmasse, insbesondere beim Injizieren eines Klebers oder einer Spritzgussmasse, das Faserbündel nicht aufweitet.

Die Erfindung eignet sich beispielsweise zur Bereitstellung von streifenförmigen Beleuchtungen in Wohnräumen, insbesondere für Möbel, zur Konturenbeleuchtung für Fahrzeuge, insbesondere von Sitzen, Bordküchen, Waschräumen, Toiletten in Zügen, Flugzeugen und Bussen. Weiter eignet sich die Erfindung zur Konturenbeleuchtung im medizinischen Bereich, z.B. in Operationssälen, Behandlungsstühlen, insbesondere von Zahnärzten.

In Verbindung mit einer Fotodiode oder einem Fototransistor kann die Erfindung für Detektionskabel für Lichtblitze, beispielsweise zur Schaltschranküberwachung, verwendet werden.

### Beschreibung der Zeichnungen

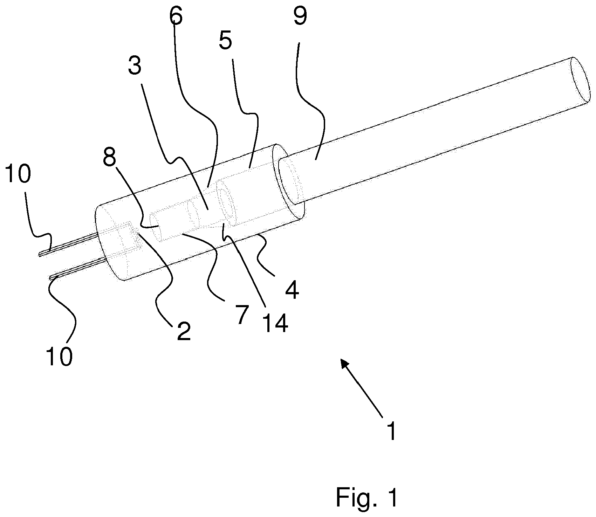

Die Erfindung soll im Folgenden Bezug nehmend auf in den Figuren Fig. 1 bis Fig. 3 schematisch dargestellte Ausführungsbeispiele näher erläutert werden.

Fig. 1 zeigt, schematisch dargestellt, eine Baugruppe 1 mit einem optischen Konversionselement 2 und einem Glasfaserbündel 3.

In dieser Ausführungsform wird die Baugruppe 1 wie folgt hergestellt.

Verwendet wird zunächst eine transparente Hülse 4, beispielsweise aus Polymethylmetacrylat.

Die Hülse 4 weist auf Seite des Glasfaserkabels einen ersten zylindrischen Abschnitt 5, also eine zylindrische Innenausnehmung auf.

An diesen zylindrischen Abschnitt 5 schließt sich ein konischer Abschnitt 6 an, der in diesem Ausführungsbeispiel die Form eines Kegelstumpfes hat. An diesen Abschnitt schließt sich ein weiterer zylindrischer Abschnitt 7 an, der sich bis zum Ende der Hülse 5 erstreckt, so dass diese zunächst hohl ist.

Das optische Konversionselement 2, beispielsweise in Form einer LED oder Fotozelle weist rückseitig Kontakte 10 auf und wird nunmehr von einer Seite in den zylindrischen Abschnitt 7 der Hülse 4 eingeführt. Dabei schauen die Kontakte 10 aus der Hülse heraus. Sodann kann die Hülse 4 mit einer transparenten Vergussmasse 14 aufgefüllt werden.

Zum Einführen des Glasfaserkabels wird der Kabelmantel 9 im vorderen Bereich entfernt, so dass das Glasfaserbündel 3 frei liegt. Das aus Kabelmantel 9 und Glasfaserbündel 3 bestehende Kabel wird nunmehr in die Hülse 4 eingeführt. Der Durchmesser des ersten zylindrischen Abschnitts 5 ist dabei an den Durchmesser des Kabelmantels 9 angepasst, so dass die Länge der Abisolierung bestimmt, wie tief das Kabel eingeschoben werden kann, da der Kabelmantel 9 aufgrund seines Durchmessers nicht durch den konischen Abschnitt 6 hindurchgeführt werden kann. Durch den konischen Abschnitt 6 werden die Einzelfasern (nicht dargestellt) des Glasfaserbündels 3 zusammengeführt und in den weiteren zylindrischen Abschnitt 7 eingeführt, dessen Durchmesser dem Durchmesser des Glasfaserbündels angepasst ist.

Die nunmehr in der Vergussmasse eingebetteten Glasfasern 3 bilden die Lichteintrittsfläche 8 des Glasfaserbündels, welche dem optischen Konversionselement 2 gegenüber liegt.

Da die Brechzahl der Vergussmasse im Wesentlichen der Brechzahl des Kerns der Glasfasern entspricht, ist eine gute optische Kopplung zwischen Konversionselement 2 und Glasfaserbündel 3 gewährleistet.

Die Vergussmasse kann beispielsweise durch die transparente Hülse 4 hindurch mittels UV-Licht ausgehärtet werden.

So kann auf einfache und kostengünstige Weise ein Konversionselement mit einem Glasfaserbündel gekoppelt werden.

Diese Variante der optischen Kopplung eignet sich insbesondere, um vor Ort, also beispielsweise während der Herstellung eines Fahrzeugs, Glasfaserkabel zu konfektionieren und anzuschließen, da nicht erforderlich ist, auf größere Werkzeugmaschinen wie Spritzgusswerkzeuge zurückzugreifen.

Statt einer UV vernetzenden Vergussmasse kann beispielsweise auch ein unter Hitze vernetzender Kleber oder ein Zwei-Komponenten-Epoxydharz oder ein Zwei-Komponenten-Silikon verwendet werde. Diese Materialien eignen sich insbesondere bei speziellen Anforderungen an chemische Resistenz, Temperaturstabilität und/oder Dichtigkeit.

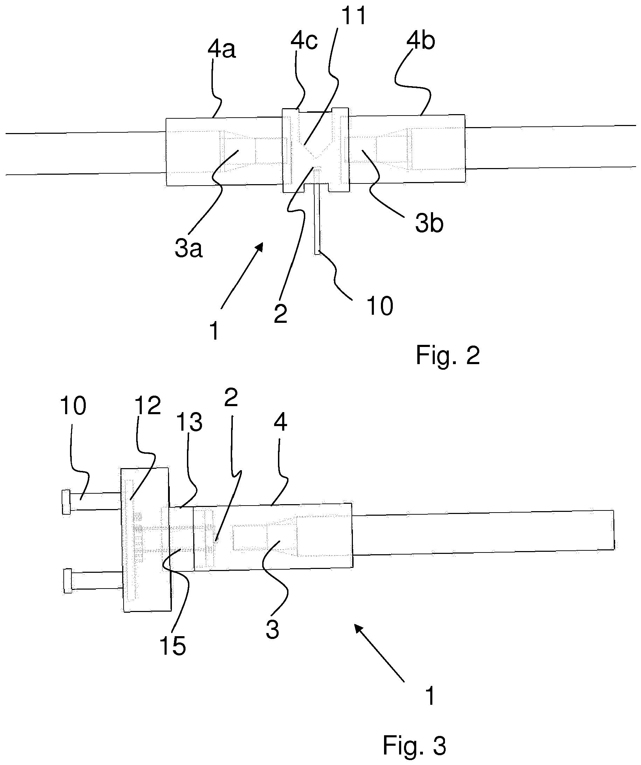

Fig. 2 zeigt eine alternative Ausführungsform einer Baugruppe 1, bei welcher das optische Konversionselement 2 quer zur Haupterstreckungsrichtung der Glasfasern von der Seite eingefügt ist.

Die Hülse besteht in diesem Ausführungsbeispiel aus den drei Abschnitten 4a, 4c und 4b, wobei die Abschnitte 4a und 4b im Wesentlichen der in Fig. 1 dargestellten Hülse entsprechen, so dass die Schritte zum Einführen des Glasfaserkabels übertragbar sind. Der mittlere Abschnitt 4c dient der Einbettung des optischen Konversionselements 2 in der Vergussmasse.

Die Hülsenabschnitte 4a, 4b und 4c können einteilig ausgebildet sein.

Es ist aber auch denkbar, die seitliche Einbringung des Konversionselementes 2 so zu nutzen, dass mehrere Hülsenabschnitte ineinander steckbar sind oder aneinander angereiht werden können oder zu einem Ring zusammengeschlossen werden können (nicht dargestellt).

Auch die Hülse 4c ist zunächst innen hohl und wird vor oder nach dem Einführen des Konversionselementes mit einer Vergussmasse ausgefüllt, wobei nur die Kontakte 10 heraus ragen.

In der Vergussmasse des Hülsenabschnitts 4c ist ein Reflektionselement 11 eingebettet, über welches von dem optischen Konversionselement abgestrahltes Licht in die Glasfaserbündel 3a, 3b eingekoppelt wird.

Als Reflektionselement 11 kann beispielsweise als Doppelhohlspiegel ausgebildet sein, wobei die aktive Fläche des Konversionselementes auf die Lichteintrittsfläche des Faserbündels abgebildet wird. Gegebenenfalls kann der Abbildungsmaßstab den jeweiligen Bedingungen angepasst sein.

Fig. 3 zeigt eine weitere Ausführungsform einer Baugruppe 1. In dieser Ausführungsgruppe ist in der Hülse 4 zusätzlich eine Platine 12 mit einer Treiberschaltung eingebettet.

Die Platine weist pilzförmige Anschlusskontakte, beispielsweise des Typs GU10, auf.

Die Platine 12 ist ihrerseits über ebenfalls eingebettete elektrische Leiter 15 mit einem optischen Konversionselement 2 verbunden. Die Hülse 4 umfasst in diesem Ausführungsbeispiel einen Metallabschnitt, beispielsweise aus Kupfer oder Aluminium, der zur Kühlung dient. Dieser kann mittels metallischer Wärmeleiter oder über eine Wärmeleitpaste mit der Platine 12 und/oder dem optischen Konversionselement 2 gekoppelt sein.

Der Metallabschnitt 13 kann auch Teil eine Steck- oder Klemmverbindung sein, über die gleichzeitig Wärme über benachbarte Bauelemente (nicht dargestellt) abgeführt wird.

Ansonsten ist auch bei dieser Ausführungsform der Erfindung das Glasfaserbündel 3 in eine drei Innenabschnitte umfassende Hülse 4 eingeschoben, wobei zumindest das Konversionselement 2 und das Glasfaserbündel 3 in einer transparenten Vergussmasse derart eingebettet sind, dass Licht, welches das optisches Konversionselement 2 abstrahlt, in das Glasfaserbündel 3 eingekoppelt wird.

Durch die Erfindung konnte eine einfache und effiziente Kopplung von optischen Konversionselementen mit Glasfaserkabeln bereitgestellt werden.

### Bezugszeichenliste

- 1: Baugruppe
- 2: optisches Konversionselement
- 3: Glasfaserbündel
- 4: Hülse
- 5: erster zylindrischer Abschnitt
- 6: konischer Abschnitt
- 7: weiterer zylindrischer Abschnitt
- 8: Lichteintrittsfläche des Glasfaserbündels
- 9: Kabelmantel
- 10: Kontakt
- 11: Reflektionselement
- 12: Platine
- 13: Metallabschnitt
- 14: Vergussmasse
- 15: elektrischer Leiter

## Patentansprüche

1. Verfahren zum Koppeln eines Glasfaserbündels (3) mit einem optischen Konversionselement (2), wobei optisches Konversionselement (2) und Glasfaserbündel (3) in einer transparenten Vergussmasse (14) eingebettet werden, wobei
das Glasfaserbündel (3) von einer Seite in eine Hülse (4) eingeführt wird,
wobei zum Einführen des Glasfaserkabels der Kabelmantel (9) im vorderen Bereich entfernt wird, so dass das Glasfaserbündel (3) frei liegt und das aus Kabelmantel (9) und Glasfaserbündel (3) bestehende Kabel in die Hülse (4) eingeführt wird,
und wobei das optische Konversionselement (2) von einer anderen Seite in die Hülse (4) eingeführt wird, welche einen Abschnitt (6) mit konischer Form aufweist, wobei an den konischen Abschnitt auf beiden Seiten ein im wesentlichen zylindrischer Abschnitt (5, 7) angrenzt und die Hülse (4) mit einer aushärtbaren transparenten Vergussmasse (14) gefüllt wird, so dass optisches Konversionselement (2) und Glasfaserbündel (3) in der Vergussmasse (14) eingebettet sind, wobei das optische Konversionselement (2) in die Hülse (4) eingeführt wird, sodann die Hülse (4) mit der Vergussmasse (14) gefüllt wird, danach das Glasfaserbündel (3) eingeführt wird und sodann die Vergussmasse (14) ausgehärtet wird, und so dass auf einer Seite des konischen Abschnittes (6) das mit einer Ummantelung (9) umhüllte Glasfaserbündel (3) sitzt und auf der gegenüberliegenden Seite das Glasfaserbündel (3) in der Vergussmasse (14) eingebettet ist.

2. Verfahren zum Koppeln eines Glasfaserbündels (3) mit einem optischen Konversionselement (2) nach dem vorstehenden Anspruch, **dadurch gekennzeichnet, dass** eine Hülse (4) mit transparenter Innenwand verwendet wird, wobei die Brechzahl der transparenten Innenwand kleiner als die Brechzahl der transparenten Vergussmasse (14) ist.

3. Verfahren zum Koppeln eines Glasfaserbündels (3) nach einem der vorstehenden Ansprüche, **dadurch gekennzeichnet, dass** eine Hülse (4) verwendet wird, welche zumindest abschnittsweise aus Metall besteht.

4. Verfahren zum Koppel eines Glasfaserbündels (3) nach einem der vorstehenden Ansprüche, **dadurch gekennzeichnet, dass** in der der Vergussmasse (14) zumindest ein elektrischen Anschlusskontakt teilweise eingebettet wird.

5. Verfahren zum Koppel eines Glasfaserbündels (3) nach einem der vorstehenden Ansprüche, **dadurch gekennzeichnet, dass** die Vergussmasse (14) mittels Licht, insbesondere mittels UV-Licht, oder mittels Wärme ausgehärtet wird.

6. Verfahren zum Koppel eines Glasfaserbündels (3) nach einem der vorstehenden Ansprüche, **dadurch gekennzeichnet, dass** das optische Konversionselement (2) seitlich zur Haupterstreckungsrichtung des Glasfaserbündels (3) eingeführt wird.

7. Baugruppe mit zumindest einem optischen Konversionselement (2) und einem Glasfaserbündel (3), wobei ein Glasfaserbündel (3) und ein optisches Konversionselement (2) in einer ausgehärteten transparenten Vergussmasse (14) eingebettet und optisch gekoppelt sind, **dadurch gekennzeichnet dass** die Baugruppe eine Hülse (4) mit einem Abschnitt mit konischer Form (6) aufweist, wobei an diesen Abschnitt auf einer Seite ein im wesentlichen zylindrischer Abschnitt (5) angrenzt, in welchem das mit einer Ummantelung (9) umhüllte Glasfaserbündel (3) sitzt und auf der gegenüberliegenden Seite ein weiterer im wesentlichen zylindrischer Abschnitt (7) angrenzt, in welchem das Glasfaserbündel (3) in der ausgehärteten transparenten Vergussmasse (14) eingebettet ist.

8. Baugruppe nach dem vorstehenden Anspruch, **dadurch gekennzeichnet, dass** die Vergussmasse (14) eine Brechzahl aufweist, welche sich von der Brechzahl des Kerns der Fasern des Glasfaserbündels (3) weniger als 0,15, vorzugsweise weniger als 0,08 unterscheidet.

9. Baugruppe nach einem der vorstehenden Ansprüche, **dadurch gekennzeichnet, dass** das optische Konversionselement (2) seitlich zu einer Haupterstreckungsrichtung des Glasfaserbündels (3) in die Vergussmasse ragt, wobei das Konversionselement (2) mittels eines in der Kunststoffhülse eingebetteten Reflexionselementes optisch mit dem Glasfaserbündel (3) gekoppelt ist.

## Claims

1. A method for coupling an optical fibre bundle (3) to an optical conversion element (2), wherein the optical conversion element (2) and the optical fibre bundle (3) are embedded in a transparent potting compound (14);
wherein the optical fibre bundle (3) is introduced into a sleeve (4) from one side; wherein, for introducing the optical fibre cable, the cable sheath (9) is removed at a front end portion so as to expose the optical fibre bundle (3), and the cable consisting of the cable sheath (9) and the optical fibre bundle (3) is introduced into the sleeve (4);
and wherein the optical conversion element (2) is introduced into the sleeve (4) from another side, which sleeve comprises a section (6) that has a conical shape, with a substantially cylindrical section (5, 7) adjoining said conical section on both ends thereof; and
wherein the sleeve (4) is filled with a curable transparent potting compound (14) such that the optical conversion element (2) and the optical fibre bundle (3) are embedded in the potting compound (14);
wherein the optical conversion element (2) is introduced into the sleeve (4), then the sleeve (4) is filled with the potting compound (14), then the optical fibre bundle (3) is introduced, and then the potting compound (14) is cured, and such that the optical fibre bundle (3) covered by a sheath (9) is arranged on one side of the conical section (6) and on the opposite side the optical fibre bundle (3) is embedded in the potting compound (14).

2. The method for coupling an optical fibre bundle (3) to an optical conversion element (2) according to the preceding claim, **characterised in that** a sleeve (4) with a transparent inner wall is used, wherein the refractive index of the transparent inner wall is smaller than the refractive index of the transparent potting compound (14).

3. The method for coupling an optical fibre bundle (3) according to any one of the preceding claims, **characterised in that** a sleeve (4) is used, which is made of metal at least in sections thereof.

4. The method for coupling an optical fibre bundle (3) according to any one of the preceding claims, **characterised in that** at least one electrical terminal is partially embedded in the potting compound (14).

5. The method for coupling an optical fibre bundle (3) according to any one of the preceding claims, **characterised in that** the potting compound (14) is cured using light, in particular using UV light, or by using heat.

6. The method for coupling an optical fibre bundle (3) according to any one of the preceding claims, **characterised in that** the optical conversion element (2) is introduced laterally with respect to the main extension direction of the optical fibre bundle (3).

7. An assembly comprising at least one optical conversion element (2) and an optical fibre bundle (3), wherein an optical fibre bundle (3) and an optical conversion element (2) are embedded in a cured transparent potting compound (14) and are coupled optically; **characterised in that** the assembly comprises a sleeve (4) that has a section with a conical shape (6), wherein this section is adjoined on one end by a substantially cylindrical section (5) in which the optical fibre bundle (3) covered by a sheath (9) is arranged, and is adjoined on the opposite end by a further substantially cylindrical section (7) in which the optical fibre bundle (3) is embedded in the cured transparent potting compound (14).

8. The assembly according to the preceding claim, **characterised in that** the potting compound (14) has a refractive index which differs from the refractive index of the core of the fibres of the optical fibre bundle (3) by less than 0.15, preferably by less than 0.08.

9. The assembly according to any one of the preceding claims, **characterised in that** the optical conversion element (2) protrudes into the potting compound laterally to a main extension direction of the optical fibre bundle (3), wherein the conversion element (2) is optically coupled to the optical fibre bundle (3) through a reflection element that is embedded in the plastic sleeve.

## Revendications

1. Procédé de couplage d'un faisceau de fibres optiques (3) à un élément de conversion optique (2), selon lequel l'élément de conversion optique (2) et le faisceau de fibres optiques (3) sont noyés dans une masse de scellement (14) transparente, selon lequel le faisceau de fibres optiques (3) est inséré depuis un côté dans un manchon (4), selon lequel, pour l'insertion du câble à fibres optiques, la gaine de câble (9) est retirée dans la partie avant, de sorte que le faisceau de fibres optiques (3) est dénudé, et le câble, constitué de la gaine de câble (9) et du faisceau de fibres optiques (3), est inséré dans le manchon (4), et selon lequel l'élément de conversion optique (2) est inséré depuis un autre côté dans le manchon (4) qui présente une partie (6) de forme conique, une partie (5, 7) sensiblement cylindrique jouxtant de part et d'autre la partie conique, et le manchon (4) étant rempli avec une masse de scellement (14) transparente durcissable, de sorte que l'élément de conversion optique (2) et le faisceau de fibres optiques (3) sont noyés dans la masse de scellement (14), sachant que l'élément de conversion optique (2) est inséré dans le manchon (4), puis le manchon (4) est rempli avec la masse de scellement (14), puis le faisceau de fibres optiques (3) est inséré et ensuite la masse de scellement (14) est durcie, et de sorte que sur un côté de la partie conique (6), se trouve le faisceau de fibres optiques (3) entouré d'une gaine (9), et sur le côté opposé, le faisceau de fibres optiques (3) est noyé dans la masse de scellement (14).

2. Procédé de couplage d'un faisceau de fibres optiques (3) à un élément de conversion optique (2) selon la revendication précédente, **caractérisé en ce que** l'on utilise un manchon (4) à paroi intérieure transparente, l'indice de réfraction de la paroi intérieure transparente étant inférieur à l'indice de réfraction de la masse de scellement (14) transparente.

3. Procédé de couplage d'un faisceau de fibres optiques (3) selon une des revendications précédentes, **caractérisé en ce que** l'on utilise un manchon (4) qui est constitué au moins en partie de métal.

4. Procédé de couplage d'un faisceau de fibres optiques (3) selon une des revendications précédentes, **caractérisé en ce qu'**au moins un contact de connexion électrique est noyé en partie dans la masse de scellement (14).

5. Procédé de couplage d'un faisceau de fibres optiques (3) selon une des revendications précédentes, **caractérisé en ce que** la masse de scellement (14) est durcie à l'aide de lumière, notamment de lumière UV, ou au moyen de la chaleur.

6. Procédé de couplage d'un faisceau de fibres optiques (3) selon une des revendications précédentes, **caractérisé en ce que** l'élément de conversion optique (2) est inséré latéralement par rapport à la direction de la dimension principale du faisceau de fibres optiques (3).

7. Module comprenant au moins un élément de conversion optique (2) et un faisceau de fibres optiques (3), dans lequel un faisceau de fibres optiques (3) et un élément de conversion optique (2) sont noyés dans une masse de scellement (14) transparente durcie et sont couplés optiquement, **caractérisé en ce que** le module présente un manchon (4) comportant une partie de forme conique (6), cette partie jouxtant sur un côté une partie (5) sensiblement cylindrique dans laquelle se trouve le faisceau de fibres optiques (3) entouré d'une gaine (9), et jouxtant sur le côté opposé une autre partie (7) sensiblement cylindrique dans laquelle le faisceau de fibres optiques (3) est noyé dans la masse de scellement (14) transparente durcie.

8. Module selon la revendication précédente, **caractérisé en ce que** la masse de scellement (14) présente un indice de réfraction qui est différent de moins de 0,15, de préférence de moins de 0,08, de l'indice de réfraction du coeur des fibres du faisceau de fibres optiques (3).

9. Module selon une des revendications précédentes, **caractérisé en ce que** l'élément de conversion optique (2) avance dans la masse de scellement latéralement par rapport à une direction de dimension principale du faisceau de fibres optiques (3), l'élément de conversion (2) étant couplé optiquement au faisceau de fibres optiques (3) à l'aide d'un élément de réflexion noyé dans le manchon en matière plastique.
